# EUROPEAN PATENT APPLICATION

(11) **EP 4 159 569 A1**
(43) Date of publication of application: **05.04.2023**
(21) Application number: 22198733.2
(22) Date of filing: 29.09.2022
(51) Int. Cl.: B60W 30/18, B60W 30/182, B60W 30/06, B60W 30/17, B60W 10/02, B60W 10/184, B60W 30/14, B60W 50/00

(54) **CONTROL METHOD AND SYSTEM FOR FIXED-POINT PARKING IN AUTONOMOUS DRIVING**

(30) Priority: 29.09.2021 CN 202111147122
(71) Applicant: ZF Commercial Vehicle Systems (Qingdao) Co., Ltd., Qingdao 266510 (CN)
(72) Inventor: Shi, Qinglan, QINGDAO, 266510 (CN)
(74) Representative: Eisenführ Speiser

(57) **Abstract**

The present invention discloses a control method and a system for fixed-point parking in autonomous driving, relating to the technical field of automobile intelligent driving, the control method comprising the steps of: determining a target parking spot, and automatically generating target track points, an estimated braking distance, and an estimated coasting distance; calculating the longitudinal distance between the current position and the target end point according to the target track points and the current control deviation; collecting real-time vehicle driving information, and calculating current vehicle speed, slope, and vehicle braking response time information; updating the longitudinal distance at a fixed frequency according to the longitudinal distance to the target end point and the real-time vehicle speed; on the basis of control state decision logic, performing real-time estimation of the distance to the target parking point to determine the vehicle control state. The control system comprises a vehicle information collection module, a position estimation module, and a control state decision module, and, by adopting the above-described control method, it can park a vehicle at a fixed point with high precision in the process of autonomous driving or assisted driving, while ensuring driving comfort.

## Description

### Technical Field

The present invention belongs to the technical field of automobile intelligent driving, and in particular relates to a control method and a system for fixed-point parking in autonomous driving.

### Background Art

Autonomous vehicles, in many cases, need to accurately stop in target positions, for example, when entering bus stops, electric bus charging stations, places for being attached to tractor-trailers, and docks for doing deliveries.

Methods for track tracing and real-time speed control in conventional autonomous driving are limited in terms of the response time and accuracy of actuators and, due to the following three practical circumstances, in conventional autonomous driving the accuracy achieved in controlling parking positions of heavy trucks with AMT and pneumatic braking systems is insufficient: (1) the virtual driver usually updates the vehicle location every 100 milliseconds, which means that, even at a speed of 1 km/h, the vehicle has moved 3.6 cm between two location information updates, and the location update frequency is low; (2) for most commercial vehicles, the clutch actuator and brake control system are both pneumatic actuating systems with a long response lag; for example, it takes more than 600 milliseconds with the main vehicle and more than 1000 milliseconds with a trailer for the required pressure to build up in the brake cylinders from application of the brakes; on the other hand, both clutch control and braking force control are very unstable and inaccurate in a low amplitude range; (3) to achieve parking accuracy within 10 cm, a vehicle speed that is very low (1-2 km/h) and stable (which is even more important) must be used and, for most commercial vehicles with AMT, the system needs to control the clutch so that it operates in a slipping state in this speed range, which requires the clutch and brakes to be controlled with very high accuracy.

In view of the above-described circumstances, it is necessary to develop and design specific control functions that allow high-precision, fixed-point parking by controlling the clutch and braking system, while providing great driving comfort.

### Summary of the Invention

In order to solve the above-mentioned problems, the present invention proposes a control method and a system for fixed-point parking in autonomous driving, which achieves high-precision, fixed-point parking while providing maximum comfort.

A technical solution provided by the present invention is as follows:
a control method for fixed-point parking in autonomous driving, comprising the steps of:
S1, determining a target parking spot, and automatically generating target track points, an estimated braking distance, and an estimated coasting distance;
S2, calculating the longitudinal distance between the current position and the target end point according to the target track points and the current control deviation;
S3, collecting vehicle driving information in real time, and calculating current vehicle speed, slope, and vehicle braking response time information;
S4, updating the longitudinal distance at a fixed frequency according to the longitudinal distance to the target end point and the real-time vehicle speed;
S5, on the basis of control state decision logic, estimating in real time the distance to the target parking point to determine the vehicle control state.

Further, the target track points are a list of points (p0, p1, ..., pn-1, pn), where p0 indicates the current position point, Pn indicates the target parking point, and (p1...pn-1) are discrete predicted positions between the current position point and the target parking point.

Further, the longitudinal distance of the vehicle is calculated and updated using a fusion algorithm based on Kalman filtering; the fixed frequency is preset to 10 ms.

Further, the control state decision logic is that:
If the longitudinal distance to the target end point ≤ the estimated braking distance, the braking control phase is entered;
If the longitudinal distance to the target end point ≤ the estimated coasting distance, the deceleration and coasting control phase is entered;
If the current vehicle speed ≥ steady-state target vehicle speed + compensated vehicle speed, the deceleration control phase is entered;
Otherwise, the vehicle remains in the steady-state speed control phase.

Further, in the deceleration phase, the vehicle is controlled to slowly decelerate to a set stable driving speed; in the steady-state speed phase, the clutch is controlled to enter a semi-slip friction state, so that the vehicle speed remains stable in a fixed speed range; in the deceleration and coasting phase, the clutch is controlled to release for deceleration and crawling; in the braking phase, the vehicle is, according to the distance to the target end point, controlled to stop slowly until it reaches the target position point.

A control system for fixed-point parking in autonomous driving, which, by adopting the above-described control method for fixed-point parking in autonomous driving, allows a vehicle to be parked at a fixed point in autonomous driving;
The control system comprises a vehicle information collection module, a position estimation module, and a control state decision module;
The vehicle information collection module, using a vehicle active speed sensor capable of sensing a wheel rolling distance with millimeter precision, collects vehicle traveling information in real time, calculates vehicle speed, slope, and vehicle braking response time information, and sends this information to the position estimation module;
The position estimation module, using a fusion algorithm based on Kalman filtering, calculates the vehicle position in real time on the basis of the vehicle information transmitted by the vehicle information collection module and the yaw rate having a 10 ms refresh rate in the ESC module of the vehicle;
The control state decision module, integrated with a control state decision logic control program, controls the vehicle state according to the vehicle distance and current vehicle speed estimated in real time by the position estimation module.

Further, a control system with three cascades is used, the outer cascade being configured to control vehicle positions, the intermediate cascade being configured to control vehicle speeds, and the inner cascade being configured to control braking force applied by the braking system and driveline force applied by the clutch.

Further, the control logic for completing fixed-point parking is that:
1) After entering the fixed-point parking control mode, the vehicle slowly decelerates to a preset constant maneuvering speed;
2) The vehicle maneuvering speed is maintained steadily using the motion control mode until the distance from the vehicle to the target parking point reaches the clutch pre-releasing distance calculated by means of the running resistance and the clutch release lag time;
3) The clutch is kept released and the vehicle wheels are allowed to roll freely until the distance from the vehicle to the target stopping point reaches the brake pre-applying distance calculated by means of the running resistance and the brake application lag time;
4) Once the vehicle has come to a stop, the brakes are fully applied to keep the vehicle statically safe.

Further, in the motion control mode, the speed of the vehicle is steadily controlled by the cooperation among traction control, brake control, and clutch actuator control.

Beneficial technical effects contributed by the present invention are as follows:
By using vehicle sensors and a fusion algorithm based on Kalman filtering, received positioning information is estimated in a shorter period for positioning more in real time and with and higher precision; by means of a control method of the present invention, the clutch may be controlled so that it is kept in a slipping state, which is conducive to the quick release of the power system transmission chain when the vehicle is being parked, so that the clutch control and the braking force control remain very stable and accurate even in a low amplitude range, while great driving comfort is provided; a stable and controllable speed is planned on the basis of the distance to the target parking point, and the clutch and braking system are controlled at the same time before parking to ensure parking in an optimal parking position.

### Brief Description of the Drawings

Fig. 1 is a structural diagram of a control method for fixed-point parking in autonomous driving according to the present invention;
Fig. 2 is a vehicle speed diagram of the control phase of fixed-point parking in autonomous driving according to the present invention.

### Specific Embodiments

The present invention will be described in further detail below in conjunction with the drawings and specific embodiments:
To allow high-precision, fixed-point parking, a control system for fixed-point parking in autonomous driving uses a control system with three cascades, the outer cascade being configured to control vehicle positions, the intermediate cascade being configured to control vehicle speeds, and the inner cascade being configured to control braking force applied by the braking system and driveline force applied by the clutch.

The control system mainly comprises a vehicle information collection module, a position estimation module, and a control state decision module. The vehicle information collection module, using a vehicle active speed sensor capable of sensing a wheel rolling distance with millimeter precision, collects vehicle traveling information in real time, calculates vehicle speed, slope, and vehicle braking response time information, and sends this information to the position estimation module; the position estimation module, using a fusion algorithm based on Kalman filtering, calculates the vehicle position in real time on the basis of the vehicle information transmitted by the vehicle information collection module and the yaw rate having a 10 ms refresh rate in the ESC module of the vehicle; the control state decision module, integrated with a control state decision logic control program, controls the vehicle state according to the vehicle distance and current vehicle speed estimated in real time by the position estimation module.

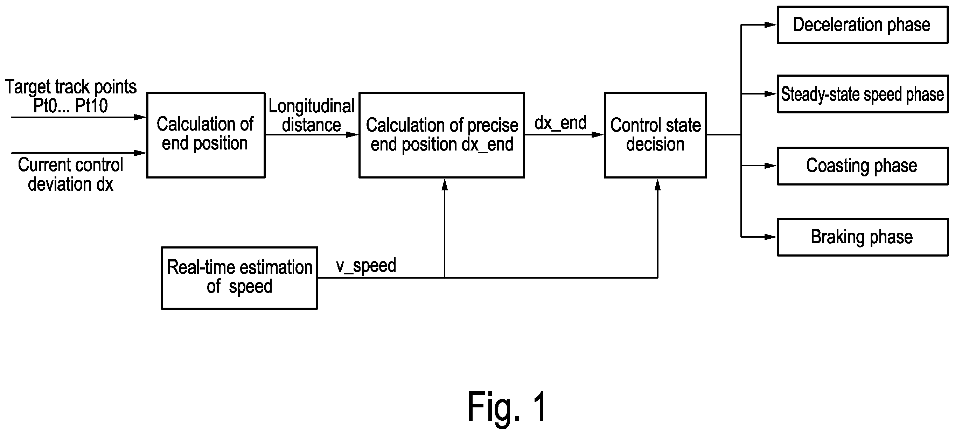

As shown in Fig. 1, a control method for fixed-point parking in autonomous driving comprises the steps of:
Step 1: first, on the basis of the control system, determining a target parking spot, and automatically generating target track points (Pt0... Ptn), an estimated braking distance, and an estimated coasting distance;
Step 2: calculating the longitudinal distance from the current position to the target end point according to the target track points (target track points automatically generated by the virtual driver in autonomous driving) and the current control deviation dx (deviation of the actual position point of the vehicle from the target track point, provided by the virtual driver), wherein the update frequency of this distance depends on the transmit frequency of target track points, and may be preset to 10 ms or lower than 10 ms;
Step 3: collecting vehicle information in real time by means of sensors installed in the vehicle, and calculating the current vehicle speed v_speed, slope, vehicle braking response time and other information;
Step 4: updating the longitudinal distance dx_end according to the longitudinal distance to the target end point and the real-time vehicle speed calculated in step 2, wherein the update frequency of the distance is the calculation frequency of the system controller, which is 10 ms or lower than 10 ms;
Step 5: according to the current vehicle speed, slope, vehicle braking response time and other information, and on the basis of the control state decision logic, estimating the distance to the target parking point in real time, so as to determine when the vehicle enters the control state of the deceleration phase, steady-state speed phase, coasting phase or braking phase, wherein the specific judgment logic of each phase is as follows:
   (1) If dx_end ≤ the estimated braking distance, the braking control phase is entered, in which the braking system is controlled according to the distance to the target end point so that the vehicle slowly stops, finally reaching the target position;
   (2) If dx_end ≤ the estimated coasting distance, the deceleration and coasting control phase is entered, in which the clutch is released to decelerate and crawl with a certain slope control;
   (3) If the current vehicle speed v_speed ≥ the steady-state target vehicle speed (1 km/h) + compensated vehicle speed (1 km/h), the deceleration control phase is entered, in which the vehicle slowly decelerates at a certain slope until it reaches the vehicle speed set in the steady state (1 km/h), the slope being determinable according to the distance to the end point;
   (4) Otherwise, the vehicle remains in the steady-state speed control phase, which is intended to control the semi-slip state of the clutch, so that vehicle speed stabilizes in a relatively narrow (1 km/h) speed range.

The above-mentioned 1 km/h is the set value for a conventional model, and may be specifically set depending on the model, environment, etc., rather than being unique.

The present invention, in essence, addresses the following key aspects.

### I. More frequent location estimations

In conventional autonomous driving, due to limitations in terms of hardware or computing resources, the virtual driver updates the vehicle position at a rate of 100 ms or higher, and performs positioning fusion with RTK, GPS, IMU and laser infrared radar SLAM. In order to achieve more precise fixed-point parking, a higher positioning rate, for example 10 ms, must be used to achieve a horizontal stop accuracy of 10 cm. Therefore, a vehicle information collection module of a control system according to the present invention adopts a low-cost solution, that is, using the Kalman position estimation algorithm based on high-precision vehicle sensor information, wherein, since information from a high-precision vehicle sensor, for example a wheel rolling distance with millimeter precision from an active speed sensor, is more accurate and direct and is aided by the yaw rate (with a 10 ms refresh rate) from the ESC module, the position estimation is much more accurate and stable than fusion results from an IMU.

### II. Position control

Information on the distance from the current position to a desired parking position is provided by the virtual driver through a track interface, which comprises continuously updating the distance to the desired target point in both longitudinal (x) and lateral (y) directions. The track interface is defined as a list of points (p0, p1, ..., pn-1, pn), where p0 indicates the current position point of the position control, Pn indicates the desired stop position point, and (p1... pn-1) indicates discrete predicted positions between the current position point and the desired stop position. In a control system of the present invention, the end stop position point is found according to the track point list, and the longitudinal distance (dx_end) between the current position of the vehicle and the found end stop position is calculated in real time in a period of 10 ms or less than 10 ms.

On the other hand, to overcome the problem of a long response lag suffered by the clutch and the braking system, longitudinal control in the target parking mode is achieved by a special model prediction method based on vehicle dynamics, wherein clutches and brakes are controlled in advance according to the estimated distance between the current position and the end stop position.

The logic of a fixed-point parking program based on the special model prediction method of vehicle dynamics is as follows:
1) When the virtual driver selects the fixed-point parking control mode, the vehicle slowly decelerates to the preset constant maneuvering speed (1 km/h);
2) The maneuvering speed is maintained steadily by using a special motion control mode until dx_end reaches the clutch pre-releasing distance calculated by means of the running resistance and the clutch release lag time;
3) Vehicle wheels are allowed to roll freely until dx_end reaches the brake pre-applying distance calculated by means of the running resistance and the brake application lag time;
4) Once the vehicle has come to a stop, the brakes are fully applied to keep the vehicle statically safe.

### III. Motion control mode

In the motion control mode, the speed of the vehicle is steadily controlled by the cooperation among traction control, brake control, and clutch actuator control.

### (1) Traction control

For longitudinal motion control, a traction force (positive or negative) required to reach or maintain a desired speed is used as feedforward. Traction is highly dependent on road slope, rolling resistance, and air resistance, which may be estimated from kinematic values and vehicle dynamics in other functional modules in the autonomous driving system, and a feedback controller of actual vehicle speeds provided by the motion module is used, so as to minimize speed control errors.

In addition to the above-mentioned commonly used control methods, special control methods are also required in some special circumstances. For example, when the vehicle is meeting with low running resistance (for example, when a truck is traveling alone or a truck trailer is going down a slight slope), it is difficult to keep the vehicle speed at a target value because a dry clutch system cannot precisely control the clutch torque around small torques. To overcome this problem, a slight braking force will be applied simultaneously with clutch engagement control. This will help balance clutch torque and driving resistance in a deeper position, allowing more stable and controllable clutch torque control.

### (2) Brake control

With the brake controller, the processing of negative tractive force (braking force) is divided into the braking force that each actuator needs to output, which comprises a service brake, a retarder, an electric motor/non-internal combustion engine and other components, and, on the basis thereof, the air pressure of the service brake, as well as the torque (output) of the retarder and the engine are controlled. For more effective utilization of the power recovery function of the electric motor/non-internal combustion engine in braking, the interaction between conventional brakes and them is particularly important. Further, on the basis of the diversity of braking systems, electric motors/non-internal combustion engines, their functions are unified into an abstract, generalized hardware layer.

To improve driving comfort by reducing the braking shock felt at the end of a parking operation, the brake pressure redistribution from the front axle to the rear axle, implemented in the soft parking function, is used.

### (3) Clutch actuator control

Due to the low-speed control range, positive tractive force generated during target-controlled parking is handled by clutch control within the transmission control function. In this case, a clutch torque control function should be provided to support this special motion control. Since no clutch torque request is defined in J1939, no AMT system is available on the market that supports this interface. Therefore, clutch torque is controlled by virtual accelerator pedal position.

Further, in addition to precise position control, continuous vehicle motion (continuous speed, acceleration and jerk) should also be required to maximize driving comfort, thereby minimizing braking shock. Since provision of great driving comfort may lead to a reduction in the accuracy of parking position, it is possible to define a maximum comfort mode (braking deceleration > -1 m/s^2) and a maximum accuracy mode (the vehicle, when stopped, is < 10 cm from the target position) to meet the primary objective of a driving task.

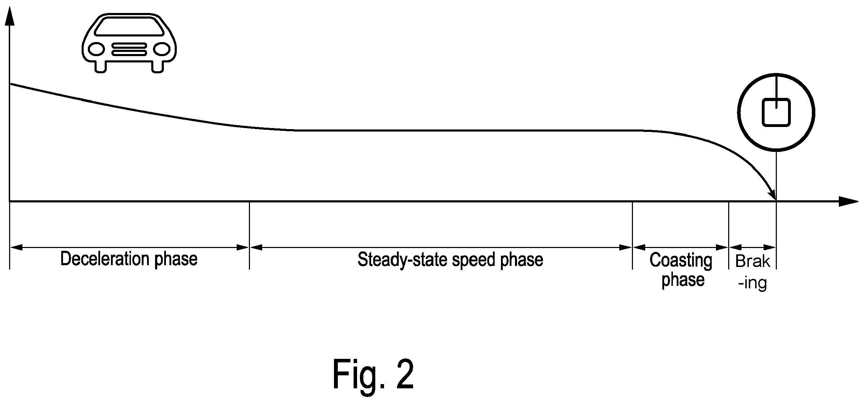

Fig. 2 shows a case of fixed-point parking in autonomous driving, wherein the vehicle autonomously travels on the road to a predetermined parking point, and the sensors installed in the vehicle collect vehicle traveling information in real time, calculate the current vehicle speed, slope, vehicle braking response time and other information in real time, and estimate the distance to the target parking point in real time. When the vehicle has traveled to a preset value from the target point, and the vehicle speed ≥ the steady-state target vehicle speed (1 km/h) + compensated vehicle speed (1 km/h), the vehicle enters the deceleration phase and slows down, slowly decelerating with a certain slope to the speed set in a steady state (1 km/h); then, the vehicle enters the steady-state speed phase, in which the control clutch is in a semi-slip friction state, so that the vehicle speed stabilizes in a relatively narrow vehicle speed range; when the distance to the target point ≤ a preset coasting distance, the vehicle enters the deceleration and coasting phase, in which the vehicle is controlled, with a certain slope, to release the clutch to decelerate and crawl; when the distance to the target point ≤ the preset braking distance, the vehicle enters the braking control phase, in which the braking system is controlled according to the distance to the target end point, so that the vehicle slowly stops until it reaches the target position point.

Indeed, the preceding description is not intended to limit the present invention, nor is the present invention limited to the above-described examples, and alterations, modifications, additions or substitutions made by those of ordinary skill in the art within the essential scope of the present invention also fall into the scope of protection of the present invention.

## Claims

1. A control method for fixed-point parking in autonomous driving, **characterized in that** the method comprises steps of:
S1, determining a target parking spot, and automatically generating target track points, an estimated braking distance, and an estimated coasting distance;
S2, calculating the longitudinal distance between the current position and the target end point according to the target track points and the current control deviation;
S3, collecting vehicle driving information in real time, and calculating current vehicle speed, slope, and vehicle braking response time information;
S4, updating the longitudinal distance at a fixed frequency according to the longitudinal distance to the target end point and the real-time vehicle speed;
S5, on the basis of control state decision logic, estimating in real time the distance to the target parking point to determine the vehicle control state.

2. The control method for fixed-point parking in autonomous driving as claimed in claim 1, **characterized in that** the target track points are a list of points (p0, p1, ..., pn-1, pn), where p0 indicates the current position point, Pn indicates the target parking point, and (p1...pn-1) indicate discrete predicted positions between the current position point and the target parking point.

3. The control method for fixed-point parking in autonomous driving as claimed in claim 1, **characterized in that** the longitudinal distance of the vehicle is calculated and updated using a fusion algorithm based on Kalman filtering; the fixed frequency is preset to 10 ms.

4. The control method for fixed-point parking in autonomous driving as claimed in claim 1, **characterized in that** the control state decision logic is that:
if the longitudinal distance to the target end point ≤ the estimated braking distance, the braking control phase is entered;
if the longitudinal distance to the target end point ≤ the estimated coasting distance, the deceleration and coasting control phase is entered;
if the current vehicle speed ≥ steady-state target vehicle speed + compensated vehicle speed, the deceleration control phase is entered;
otherwise, the vehicle remains in the steady-state speed control phase.

5. The control method for fixed-point parking in autonomous driving as claimed in claim 4, **characterized in that**, in the deceleration phase, the vehicle is controlled to slowly decelerate to a set stable driving speed; in the steady-state speed phase, the clutch is controlled to enter a semi-slip friction state, so that the vehicle speed remains stable in a fixed speed range; in the deceleration and coasting phase, the clutch is controlled to release for deceleration and crawling; in the braking phase, the vehicle is, according to the distance to the target end point, controlled to stop slowly until it reaches the target position point.

6. A control system for fixed-point parking in autonomous driving, **characterized in that** fixed-point parking of a vehicle in autonomous driving is achieved by the control method for fixed-point parking in autonomous driving as claimed in any of claims 1-5;
the control system comprises a vehicle information collection module, a position estimation module, and a control state decision module; wherein
the vehicle information collection module, using a vehicle active speed sensor capable of sensing a wheel rolling distance with millimeter precision, collects vehicle traveling information in real time, calculates vehicle speed, slope, and vehicle braking response time information, and sends this information to the position estimation module;
the position estimation module, using a fusion algorithm based on Kalman filtering, calculates the vehicle position in real time on the basis of the vehicle information transmitted by the vehicle information collection module and the yaw rate having a 10 ms refresh rate in the ESC module of the vehicle;
the control state decision module, integrated with a control state decision logic control program, controls the vehicle state according to the vehicle distance and current vehicle speed estimated in real time by the position estimation module.

7. The control system for fixed-point parking in autonomous driving as claimed in claim 6, **characterized in that** a control system with three cascades is used, the outer cascade being configured to control vehicle positions, the intermediate cascade being configured to control vehicle speeds, the inner cascade being configured to control braking force applied by the braking system and driveline force applied by the clutch.

8. The control system for fixed-point parking in autonomous driving as claimed in claim 6, **characterized in that** the control logic for completing fixed-point parking is that:
1) after entering the fixed-point parking control mode, the vehicle slowly decelerates to a preset constant maneuvering speed;
2) the vehicle maneuvering speed is maintained steadily using the motion control mode until the distance from the vehicle to the target parking point reaches the clutch pre-releasing distance calculated by means of the running resistance and the clutch release lag time;
3) the clutch is kept released and the vehicle wheels are allowed to roll freely until the distance from the vehicle to the target stopping point reaches the brake pre-applying distance calculated by means of the running resistance and the brake application lag time;
4) once the vehicle has come to a stop, the brakes are fully applied to keep the vehicle statically safe.

9. The control system for fixed-point parking in autonomous driving as claimed in claim 8, **characterized in that**, in the motion control mode, the speed of the vehicle is steadily controlled by the cooperation among traction control, brake control, and clutch actuator control.
